**Europäisches Patentamt**

**European Patent Office**

**Office européen des brevets**

(11) Veröffentlichungsnummer: **0 128 387**

**B1**

(12) **EUROPÄISCHE PATENTSCHRIFT**

(45) Veröffentlichungstag der Patentschrift:
25.01.89

(21) Anmeldenummer: **84105552.8**

(22) Anmeldetag: **16.05.84**

(51) Int. Cl.⁴: **A 01 K 41/00**

(54) Verfahren zum Betreiben einer Kükenbrutanlage und Kükenbrutanlage.

(30) Priorität: **09.06.83 DE 3320815**

(43) Veröffentlichungstag der Anmeldung:
**19.12.84 Patentblatt 84/51**

(45) Bekanntmachung des Hinweises auf die Patenterteilung:
**25.01.89 Patentblatt 89/4**

(84) Benannte Vertragsstaaten:
**AT BE CH DE FR GB IT LI NL SE**

(56) Entgegenhaltungen:
**US-A-2 997 021**
**US-A-3 147 737**
**US-A-3 923 006**
**US-A-4 005 679**

(73) Patentinhaber: **A.J. Wormgoor B.V.,**
**Steenmorsweg 4-6, NL- 7478 PM Diepenheim (NL)**

(72) Erfinder: **Wormgoor, Arend Jan, Steenmorsweg**
**4-6, NL- 7478 PM Diepenheim (NL)**

(74) Vertreter: **Habbel, Hans- Georg, Dipl.- Ing.,**
**Postfach 3429 Am Kanonengraben 11, D-4400**
**Münster (DE)**

EP 0 128 387 B1

**Beschreibung**

Die Erfindung bezieht sich auf ein Verfahren zum Betreiben einer Kükenbrutanlage gemäß dem Oberbegriff des Patentanspruches 1.

Bei einer nach diesem Verfahren arbeitenden Kükenbrutanlage gemäß der US-A-4 005 679 ist die Belüftungs- und Erwärmungseinrichtung an einer Seite der umlaufend geförderten Wagen angeordnet, so daß stets dieselbe Seite der in den Wagen enthaltenen und auf den Horden angeordneten Eiern durch die Belüftungs- und Erwärmungseinrichtung erwärmt und belüftet wird. Die Luft kann zwar sicherlich durch die quer zu ihrer Förderrichtung nebeneinander angeordneten Wagen strömen, jedoch müssen, um dieses Durchströmen zu erreichen, die Luftgeschwindigkeiten hoch sein, was für eine gleichmäßige Erwärmung der zu brütenden Eier nachteilig ist. Auch erfolgt ein Verbrauch des Sauerstoffs über den Weg der Luft, so daß keine gleichmäßige Belüftung der in den Horden gelagerten Eier erfolgt. Die einzelnen Wagen sind je Wagen mit gleichalten Eiern beschickt. Die einzelnen Wagen sollen dabei so zusammengestellt werden, daß sich dadurch ein Ausgleich der exothermen und endothermen Temperaturverhältnisse ergibt. Dies zwingt aber dazu, daß zu Beginn des Brutvorganges der Wagen außer halb der Brutanlage mit Eiern beschickt wird, also relativ kühl ist und daß nach Durchführen des Brutvorganges dieser gesamte Wagen aus der Brutanlage herausgefahren wird und sich dabei wieder abkühlen kann. Hierdurch tritt einerseits eine Störung des Temperaturhaushaltes innerhalb der Brutanlage auf, andererseits erfolgt eine Energieverschwendung.

Der Erfindung liegt die Aufgabe zugrunde, das bekannte Verfahren dahingehend zu verbessern, daß der gesamte Wärmehaushalt des Brutofens vereinheitlicht und innerhalb der einzelnen Wagen ausgeglichener wird, wobei gleichzeitig eine möglichst gleichmäßige Belüftung der Wagen und der Horden mit dem für die Tiere erforderlichen Sauerstoff erfolgen soll.

Diese Aufgabe wird gemäß der Erfindung durch die kennzeichnenden Merkmale des Patentanspruches 1 gelöst.

Weiterhin bezieht sich die Erfindung auf eine Kükenbrutanlage zur Durchführung des erfindungsgemäßen Verfahrens, welche die Merkmale des Oberbegriffs des Patentanspruches 2 umfaßt und durch die Merkmale des kennzeichnenden Teils dieses Anspruches gekennzeichnet ist.

Aus der US-A-3 147 738 sind bei einem tunnelförmigen, zwei Wagenreihen aufnehmenden Brutofen Kopfstrecken bekannt, die das Versetzen der Wagen quer zu ihrer Längsförderrichtung ermöglichen.

Aus der US-A-3 923 006 ist es bekannt, die Erwärmungs- und Belüftungseinrichtung mittig zwischen Wagenreihen anzuordnen, wobei die Luft von oben durch die einzelnen Etagen der Wagen geführt wird.

Demgegenüber schlägt die Erfindung vor, die Wagen so um die mittig angeordnete Belüftungs- und Erwärmungseinrichtung herumzuführen, daß auf dem einen Weg die eine Seite des Wagens von der Frischluft bestrichen wird und auf dem anderen Weg die andere Seite des Wagens und daß innerhalb jedes einzelnen Wagens Eier unterschiedlichen Brutalters angeordnet sind, so daß sowohl eine gute Belüftung und damit Sauerstoffversorgung der Eier erfolgt, ohne ein Austrocknen der Eier befürchten zu müssen und andererseits der endotherme und exotherme Wärmeausgleich innerhalb des Wagens selbst herbeigeführt wird. Die Wagen bleiben ständig in der Anlage, d. h. im eigentlichen Brutofen, so daß beim Einsatz neuer zu bebrütender Eier keine wesentliche Störung des Wärmehaushaltes der Anlage erfolgt.

Vorteilhafte Ausgestaltungen der erfindungsgemäßen Kükenbrutanlage sind in den Unteransprüchen 3 und 4 erläutert.

Insbesondere gemäß dem Vorschlag nach Anspruch 4 ist innerhalb des eigentlichen wärmeisolierten Brutofens ein tunnelförmiger Mantel aus gut wärmeleitendem Blech angeordnet, der die beiden Förderstrecken sowie die Belüftungs- und Erwärmungseinrichtungen aufnimmt. Hierdurch wird ein guter Temperaturausgleich zwischen dem Brutofen und dem Tunnel erreicht, wodurch die Wärmesteuerung zu dem eigentlichen Brutbereich wesentlich vereinfacht werden kann.

Ein Ausführungsbeispiel der Erfindung wird nachfolgend anhand der Zeichnungen erläutert. Die Zeichnungen zeigen dabei in

Fig. 1 eine Seitenansicht, teilweise geschnitten, einer Kükenbrutanlage, in

Fig. 2 eine schematische Draufsicht auf die Kükenbrutanlage, in

Fig. 3 einen Schnitt durch die Kükenbrutanlage zur Verdeutlichung des Aufbaues des Inneren ihres Brutofens und in

Fig. 4 einen "Verschiebeplan" für die Wagen.

In den Zeichnungen ist mit 1 ein Brutofen bezeichnet, in dem zwei parallel zueinander ausgerichtete Förderstrecken 2 und 3 für Wagen 4 angeordnet sind. Die Förderstrecken 2 und 3 bestehen beispielsweise aus einfachen Schienen, auf denen die Wagen 4 über Laufräder verfahren können. Am Ende der Förderstrecken 2 und 3 sind quer verlaufende Kopfstrecken 5 und 6 angeordnet, die ein Umsetzen der von der Förderstrecke 3 kommenden Wagen zur Förderstrecke 2 ermöglichen bzw. ein Umsetzen der von der Förderstrecke 2 kommenden Wagen zur Förderstrecke 3. Am kopfseitigen Ende der Förderstrecke 3 und im Bereich des entsprechenden Endes der Kopfstrecke 6 ist eine Beschickungs- und Dechargierungseinrichtung 7 vorgesehen, an der nunmehr die Wagen 4 mit Eiern beschickt werden können.

Jeder Wagen 4 trägt bei dem dargestellten Ausführungsbeispiel in zwei nebeneinander angeordneten Hordenreihen je fünfzehn übereinander angeordnete Horden 8. Die Horden 8 sind um Achsen schwenkbar gelagert, die mit ihrer Längsachse quer zur Förderrichtung der Wagen 4 auf den Förderstrecken 2 und 3 ausgerichtet sind.

Der Vorschub der Wagen auf den Förderstrecken 2 und 3 erfolgt über hydraulische Fördereinrichtungen 9 und 10, d. h. jeweils ein Wagen 4 wird durch beispielsweise die hydraulische Einrichtung 9 auf die Förderstrecke 3 geschoben. Durch den dann auf den nachfolgenden Wagen ausgeübten Druck wird dieser Wagen durch den Brutofen über die Förderstrecke 3 zur Kopfstrecke 5 gefördert, dann hier über entsprechende Querfördereinrichtungen 11 zum kopfseitigen Ende der Förderstrecke 2 geführt und hier wieder über die hydraulische Einrichtung 10 auf die Förderstrecke 2 geschoben und durch den Brutofen geführt, bis dieser Wagen auf der Kopfstrecke 6 ankommt, wo er über eine entsprechende Fördereinrichtung 12 zur Beschickungs- und Dechargierungseinrichtung 7 gelangt.

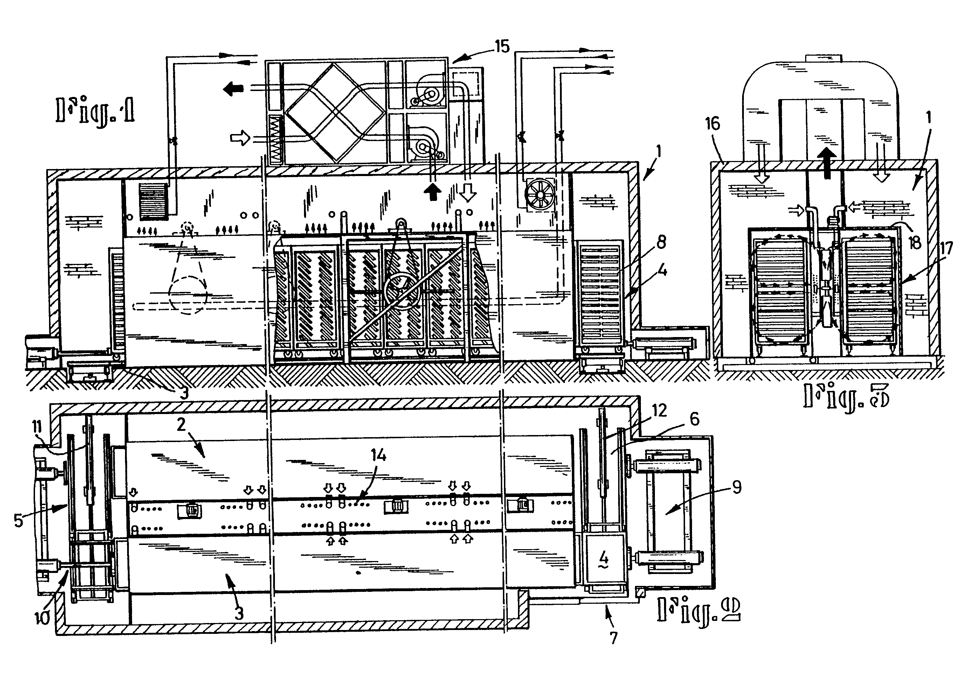

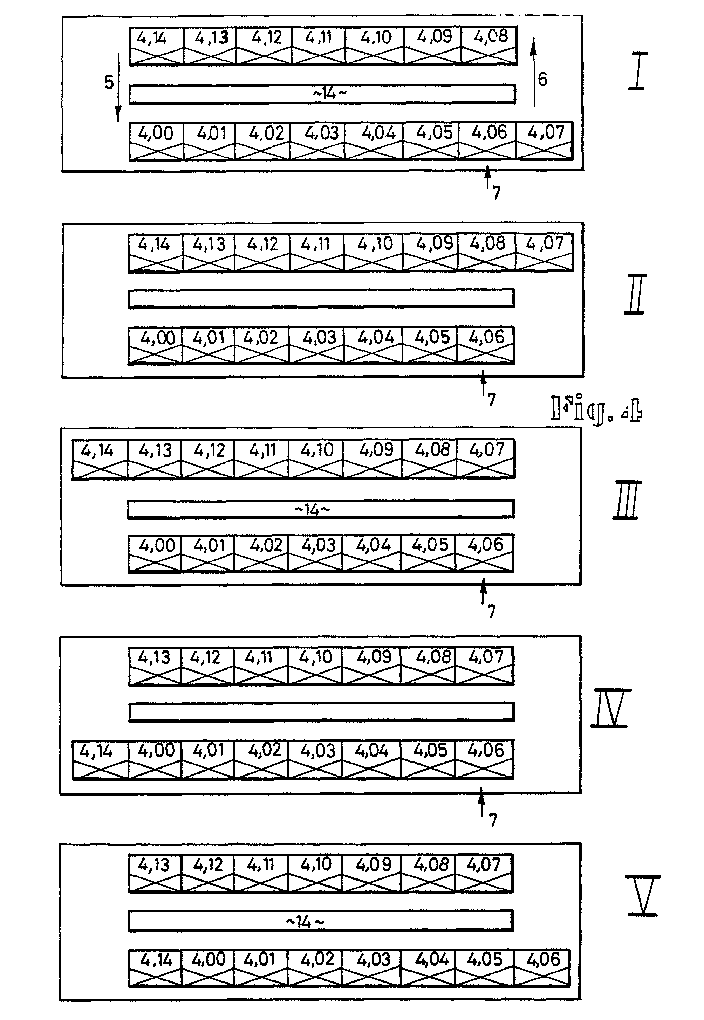

Die beiden Förderstrecken 2 und 3 sind im Abstand voneinander angeordnet und in dem derart gebildeten freien Raum zwischen den beiden Förderstrecken sind Belüftungs- und Erwärmungseinrichtungen 14 vorgesehen. Wie dies Fig. 3 zeigt, wird durch diese Belüftungs- und Erwärmungseinrichtungen 14 Warmluft durch die Horden 8 der Wagen 4 geführt und dann abgesaugt. Durch das Versetzen der Wagen 4 über die Kopfstrecken 5 und 6 wird bewirkt, daß jeder Wagen 4 von jeder seiner Längsseiten her auf die Durchwanderung des Brutofens 1 entsprechend belüftet und erwärmt wird. Hierbei kann auch eine entsprechende Feuchtigkeitszufuhr erfolgen und es ist erkennbar, daß die Wagen 4 bei relativ niedriger Luftgeschwindigkeit (die die Austrocknungsgefahr der Eier verringert) ausreichend von allen Seiten belüftet und erwärmt wird.

Oberhalb des eigentlichen Brutofens 1 kann eine Wärmerückgewinnungsanlage 15 vorgesehen sein.

Die einzelnen Horden 8 jedes Wagens 4 werden in Etagen unterteilt, wobei drei Horden 8 eine Etageneinheit bilden, so daß bei fünfzehn Horden 8 fünf unterschiedliche Etageneinheiten geschaffen werden, die mit unterschiedlich alten Eiern beschickt sind, so daß dadurch der Aufwärmprozeß innerhalb eines Wagens 4 unter Rückgewinnung der entstehenden Eigenwärme beim Brütvorgang der Eier besser ausgenutzt wird.

In Fig. 3 ist erkennbar, daß der eigentliche Brutofen 1 aus einem isolierten Außengehäuse 16 besteht und daß in dem Brutofen 1 ein tunnelförmiger Mantel 17 angeordnet ist, der als Durchlaufofen ausgebildet ist, wobei der Mantel 17 Wände 18 aus gut wärmeleitendem Werkstoff aufweist, so daß das Innere des Brutofens 1 außerhalb des Mantels 17 wie ein Wärmepuffer wirkt, der die Steuerung des Wärmehaushaltes innerhalb des Mantels 17 erleichtert und verfeinert.

In den Zeichnungen sind mit vollen Pfeilen die Abluft- und mit Hohlpfeilen die Warmluftströme dargestellt.

Die zum Betreiben der Anlage weiterhin erforderlichen Sensoren, Antriebseinrichtungen und Ventilatoren wie auch Förderleitungen sind aus Übersichtlichkeitsgründen in der Zeichnung teilweise nicht dargestellt und nicht näher erläutert.

In Fig. 4 ist ein die Arbeitsweise der Anlage verdeutlichender Verschiebeplan dargestellt.

Die einzelnen Wagen sind mit den Bezugszeichen 4,00 bis 4,14 bezeichnet. Die beiden Kopfstrecken tragen die Bezugszeichen 5 und 6, und in der Mitte der beiden Wagenreihen ist die Belüftungs- und Erwärmungseinrichtung 14 angeordnet. Bei 7 ist in Fig. 4 die Beschickungs- und Dechargierungsstelle erkennbar.

In der Phase I befindet sich der Wagen 4,07 im Bereich der Kopfstrecke 6 und wird von der in Fig. 2 dargestellten Fördereinrichtung 12 in die in Fig. 4 als Phase II dargestellte Stellung bewegt.

Dann wird bei der Phase II die ganze Wagenreihe, bestehend aus den Wagen 4,07 bis 4,14, durch die hydraulische Einrichtung 9 um eine Wagenlänge vorbewegt und kommt dadurch in die in Fig. 4 als Phase III gezeigte Stellung. Aus dieser Stellung wird nunmehr der Wagen 4,14 über die Kopfstrecke 5, d. h. die Querfördereinrichtung 11, in die in Fig. 4 als Phase IV dargestellte Stellung bewegt. Anschließend erfolgt ein Vorschub über die hydraulische Einrichtung 10, so daß die gesamte Wagenreihe 4,14 bis 4,06 in die in Fig. 4 dargestellte Phase V bewegt wird.

Aus dem Verschiebeplan in Fig. 4 ist erkennbar, daß die Wagen stets im Brutofen verbleiben, also kein Wagen insgesamt aus dem Brutofen entnommen wird, sondern nur im Bereich der Beschickungs- und Dechargierungseinrichtung 7 werden die fertig gebrüteten Horden entnommen und an deren Stelle Horden mit frischen Eiern eingesetzt. Dann erfolgt weiterhin ein stetiger Umlauf des Wagens.

**Patentansprüche**

1. Verfahraren zum Betreiben einer Kükenbrutanlage mit einem langgestreckt ausgebildeten, mit Belüftungs- und Erwärmungseinrichtungen sowie einer Beschickungs- und Dechargierungseinrichtung ausgerüsteten Brutofen und mit auf Führungsbahnen geförderten Wagen, die die zu brüttenden Eier aufnehmende, schwenkbar gelagerte Horden tragen, die in mehreren Etagen übereinander in den Wagen angeordnet sind, bei welchem die Wagen während der gesamten Brutzeit kontinuierlich durch den Brutofen gefördert und die einzelnen Wagen mit unterschiedlich alten Eiern beschickt werden, dadurch gekennzeichnet, daß die Wagen rund um die beidseitig wirkenden Belüftungs- und Erwärmungseinrichtungen herumgefördert werden, wobei die Belüftung der einzelnen Horden auf der Hälfte des Weges der Wagen von der einen Seite der Wagen her und auf der anderen Hälfte des Weges der Wagen von der anderen Seite der Wagen her erfolgt und daß die Etagen jedes Wagens im zeitlichen Abstand zueinander mit bezüglich des Brutvorganges unterschiedlich alten Horden beschickt werden.

2. Kükenbrutanlage zur Durchführung des Verfahrens nach Anspruch 1 mit einem langgestreckt ausgebildeten, mit Belüftungs- und Erwärmungseinrichtungen (14) sowie einer Beschickungs- und Dechargierungseinrichtung (7) ausgerüsteten Brutofen (1), mit auf Führungsbahnen (2, 3, 5, 6) geförderten Wagen (4), die die zu brütenden Eier aufnehmende, schwenkbar gelagerte Horden (8) tragen, die in mehreren Etagen übereinander in den Wagen (4) angeordnet sind und mit die Wagen (4) umlaufend fördernden Fördereinrichtungen (9, 10, 11, 12), wobei die Führungsbahnen (2, 3, 5, 6) zwei parallel zueinander ausgerichtete Förderstrecken (2, 3) und diese verbindende Kopfstrecken (5, 6) umfassen, dadurch gekennzeichnet, daß die Belüftungs- und Erwärmungseinrichtungen (14) mittig zwischen den Förderstrecken (2, 3) angeordnet sind und daß die Kopfstrecken (5, 6) als die Wagen (4) quer versetzende Querförderstrecken ausgebildet sind und die Beschickungs- und Dechargierungseinrichtung (7) das Be- und Entladen einzelner Horden (8) eines im Brutofen (1) verbleibenden Wagens (4) ermöglicht.

3. Kükenbrutanlage nach Anspruch 2, bei der die Beschickungs- und die Dechargierungseinrichtung (7) vor Kopf der Förderstrecken (2, 3) angeordnet sind, dadurch gekennzeichnet, daß die Beschickungs- und Dechargierungseinrichtung (7) für die Horden (8) an einer Stelle örtlich zusammenfallen.

4. Kükenbrutanlage nach Anspruch 2 oder 3, dadurch gekennzeichnet, daß die beiden Förderstrecken (2, 3) sowie die Belüftungs- und Erwärmungseinrichtungen (14) von einem tunnelförmigen Mantel (17) aus gut wärmeleitendem Blech (18) od. dgl. umgeben sind.

## Claims

1. Method for operating an incubation plant for chickens, comprising an incubator, of elongated configuration and equipped with ventilating and heating devices as veil as a loading and unloading device, and carriages which are conveyed on guide tracks and carry the pivotably mounted trays which receive the eggs to be incubated and are arranged in the carriages in a plurality of tiers one above the other, in which the carriages are continuously conveyed through the incubator during the entire incubating period and the individual carriages are loaded with eggs of different age, characterized in that the carriages are conveyed around the ventilating and heating devices acting on both sides, the individual trays being ventilated over half the carriage path from one side of the carriages and over the other half of the carriage path from the other side of the carriages, and that the tiers of each carriage are loaded, at relative time intervals, with trays which are of different age with respect to the incubating operation.

2. Incubation plant for chickens for performing the method according to claim 1, comprising an incubator (1), of elongated configuration and equipped with ventilating and heating devices (14) as veil as a loading and unloading device (7), carriages (4), which are conveyed on guide tracks (2, 3, 5, 6) and carrying the pivotably mounted trays (8) which receive the eggs to be incubated and are arranged in the carriages (4) in a plurality of tiers one above the other and conveying devices (9, 10, 11, 12) conveying the carriages (4) in a circulating manner, the guide tracks (2, 3, 5, 6) comprising two conveying sections (2, 3) aligned parallel to one another and head sections (5, 6) connecting these conveying sections (2, 3), characterized in that the ventilating and heating devices (14) are arranged centrally between the conveying sections (2, 3), and that the head sections (5, 6) are designed as transverse conveying sections displacing the carriages (4) transversely, and the loading and unloading device (7) enables the individual trays (8) of a carriage (4) remaining in the incubator (1) to be loaded and unloaded.

3. Incubation plant for chickens according to claim 2, in which the loading and unloading devices (7) are arranged in front of the head of the conveying sections (2, 3), characterized in that the loading and unloading devices (7) for the trays (8) coincide at one location.

4. Incubation plant for chickens according to claim 2 or 3, characterized in that the two conveying sections (2, 3) and also the ventilating and heating devices (14) are surrounded by a tunnel-shaped casing (17) made of a sheet metal (18) or the like which is a good heat conductor.

## Revendications

1. Procédé d'exploitation d'une installation d'incubation de poussins comprenant un incubateur de forme allongée, équipé de dispositifs d'aération et de chauffage et d'un dispositif de chargement et de déchargement ainsi que de chariots transportés sur des voies de guidage et qui portent des grilles recevant les oeufs à incuber et superposées en plusieurs étages, procédé dans lequel les chariots sont transportés continuellement à travers l'incubateur pendant toute la durée du temps d'incubation et les différents chariots sont garnis d'oeufs d'âges différents, caractérisé en ce que les chariots sont transportés en un circuit fermé autour des dispositifs d'aération et de chauffage qui agissent sur les deux côtés, l'aération des différentes grilles se produisant par un côté des chariots sur la moitié du trajet des chariots et par l'autre côté des chariots sur l'autre moitié du trajet des chariots et les étages de chaque chariot étant garnis de grilles d'âges différents à un certain écartement temporel relativement au processus d'incubation.

2. Installation d'incubation de poussins pour la mise en oeuvre du procédé selon la revendication 1, comprenant un incubateur (1) de forme allongée, équipé de dispositifs d'aération et de chauffage (14) ainsi que d'un dispositif de chargement et de déchargement (7) et de chariots (4) transportés sur des voies de guidage (2, 3, 5, 6), qui portent les grilles (8) recevant les oeufs à incuber et montées basculantes, qui sont disposées les unes au-dessus des autres en plusieurs étages dans les chariots (4), ainsi que des dispositifs de transports (9, 10, 11, 12) qui transportent les chariots en circuit fermé, les voies de guidage (2, 3, 5, 6) comprenant deux voies de transport (2, 3) orientées parallèlement l'une à l'autre et des voies de tête (5, 6) qui raccordent les premières, caractérisée en ce que les dispositifs d'aération et de chauffage (14) sont disposés au milieu entre les voies de transport (2, 3), en ce que les voies de tête (5, 6) sont constituées par des voies de transport transversales qui déplacent les chariots (4) transversalement et en ce que le dispositif de chargement et de déchargement (7) permet de charger et de décharger les grilles individuelles (8) d'un chariot (4), qui restent dans l'incubateur (1).

3. Installation d'incubation de poussins selon la revendication 2, dans lequel le dispositif de chargement et de déchargement (7) est disposé en amont de la tête des voies de transport (2, 3), caractérisée en ce que les dispositifs de chargement et de déchargement (7) des grilles (8) sont en coïncidence dans un même point.

4. Installation d'incubation de poussins selon la revendication 2 ou 3, caractérisée en ce que les deux voies de transport (2, 3) ainsi que les dispositifs d'aération et de chauffage (14) sont entourés d'un caisson (17) en forme de tunnel, qui est fait d'une tôle conductrice de la chaleur (18) ou équivalent.

Fig. 1

Fig. 2

Fig. 3

EP 0 128 387 B1

| 4,14 | 4,13 | 4,12 | 4,11 | 4,10 | 4,09 | 4,08 |
|------|------|------|------|------|------|------|

5 ↓                                               6 ↑

~14~

| 4,00 | 4,01 | 4,02 | 4,03 | 4,04 | 4,05 | 4,06 | 4,07 |
|------|------|------|------|------|------|------|------|

↑ 7

I

| 4,14 | 4,13 | 4,12 | 4,11 | 4,10 | 4,09 | 4,08 | 4,07 |
|------|------|------|------|------|------|------|------|

| 4,00 | 4,01 | 4,02 | 4,03 | 4,04 | 4,05 | 4,06 |
|------|------|------|------|------|------|------|

↑ 7

II

Fig. 4

| 4,14 | 4,13 | 4,12 | 4,11 | 4,10 | 4,09 | 4,08 | 4,07 |
|------|------|------|------|------|------|------|------|

~14~

| 4,00 | 4,01 | 4,02 | 4,03 | 4,04 | 4,05 | 4,06 |
|------|------|------|------|------|------|------|

↑ 7

III

| 4,13 | 4,12 | 4,11 | 4,10 | 4,09 | 4,08 | 4,07 |
|------|------|------|------|------|------|------|

| 4,14 | 4,00 | 4,01 | 4,02 | 4,03 | 4,04 | 4,05 | 4,06 |
|------|------|------|------|------|------|------|------|

↑ 7

IV

| 4,13 | 4,12 | 4,11 | 4,10 | 4,09 | 4,08 | 4,07 |
|------|------|------|------|------|------|------|

~14~

| 4,14 | 4,00 | 4,01 | 4,02 | 4,03 | 4,04 | 4,05 | 4,06 |
|------|------|------|------|------|------|------|------|

V